(19) Europäisches Patentamt
European Patent Office
Office européen des brevets

(11) **EP 4 454 860 A1**

(12) **EUROPEAN PATENT APPLICATION**
published in accordance with Art. 153(4) EPC

(43) Date of publication:
**30.10.2024 Bulletin 2024/44**

(21) Application number: **23882892.5**

(22) Date of filing: **15.09.2023**

(51) International Patent Classification (IPC):
**B29C 59/02** (2006.01)    **B29C 43/02** (2006.01)
**B29C 59/00** (2006.01)    **B29C 70/06** (2006.01)
**B29C 51/10** (2006.01)

(52) Cooperative Patent Classification (CPC):
**B29C 43/02; B29C 51/10; B29C 59/00;
B29C 59/02; B29C 70/06**

(86) International application number:
**PCT/KR2023/013876**

(87) International publication number:
**WO 2024/090785 (02.05.2024 Gazette 2024/18)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.10.2022 KR 20220141267**

(71) Applicant: **LG Chem, Ltd.
Yeongdeungpo-gu
Seoul 07336 (KR)**

(72) Inventors:
• **YOON, Jung Hwan**
  **Daejeon 34122 (KR)**
• **IM, Dam Hyeok**
  **Daejeon 34122 (KR)**
• **JUNG, Jin Mi**
  **Daejeon 34122 (KR)**
• **MOON, Sung Nam**
  **Daejeon 34122 (KR)**

(74) Representative: **Hoffmann Eitle
Patent- und Rechtsanwälte PartmbB
Arabellastraße 30
81925 München (DE)**

(54) **MOLDED BODY**

(57)    The present application can provide a plate-like molded body, a manufacturing method thereof, and a use of the plate-like molded body. The present application can provide a plate-like molded body including a concavo-convex shape having intaglio portions and raised portions, and having pores formed therein, a method for manufacturing the plate-like molded body, and a use of the plate-like molded body. The present application can provide such a plate-like molded body with uniform mechanical properties.

[Figure 1]

**EP 4 454 860 A1**

## Description

### Technical Field

The present application relates to a molded body, a manufacturing method thereof, and a use of the molded body.

### Background Art

Materials comprising pores can be used for various applications.

For example, such materials can be used as materials processing heat generated from products. As described above, the importance of technology for processing heat generated from products increases.

It is necessary to process heat in products composed of elements (heating elements) that generate heat. For example, a battery module or a battery pack comprises a plurality of battery cells or a plurality of battery modules, which are located relatively adjacent to each other. Therefore, heat generated from one battery cell or battery module can affect other adjacent elements, and in some cases, can cause problems such as chain ignition or chain explosion.

Therefore, in such products, it is necessary to ensure that heat, explosion, or fire generated from one element does not affect other adjacent elements.

### Disclosure

### Technical Problem

It is an object of the present application to provide a plate-like molded body, a manufacturing method thereof, and a use of the plate-like molded body. It is a main object of the present application to provide a plate-like molded body including a concavo-convex shape having intaglio portions and raised portions, and having pores formed therein, a method for manufacturing the plate-like molded body, and a use of the plate-like molded body. It is another object of the present application to provide such a plate-like molded body with uniform mechanical properties.

### Technical Solution

The present application relates to a molded body. The molded body may be manufactured to have a desired shape using plastics such as thermoplastic resins as a raw material. In one example, the molded body may be a plate-like molded body.

The molded body may comprise at least a resin component and a filler component.

The molded body comprises pores formed therein. Such pores may be formed at least at the interface between the resin component and the filler component inside the molded body. The molded body of the present application is manufactured through a molding step of applying a pressure to a raw fabric comprising a resin component and a filler component to form a concavo-convex shape, as described below. At this time, through control of the type of filler component contained in the raw fabric and/or the conditions of the molding step, pores may be formed inside the molded body, and in particular, the pores may be formed at the interface between the resin component and the filler component. Such a method is a method different from the existing method of forming pores through a foaming process, and the like.

A porosity of such a molded body may be adjusted to an appropriate range depending on the purpose. For example, the lower limit of the porosity of the molded body may be 10%, 15%, 20%, 25%, 30%, 35%, 40%, 45%, or 50% or so, and the upper limit thereof may be 90%, 85%, 80%, 75%, 70%, 65%, 60%, 55%, 50%, 45%, 40%, 35%, 30%, 25%, 20%, or 15% or so. The porosity may be more than or equal to, or more than any one of the above-described lower limits, may be less than, or less than or equal to any one of the above-described upper limits, or may be within a range of less than, or less than or equal to any one of the above-described upper limits while being more than or equal to, or more than any one of the above-described lower limits. The porosity may be obtained by the method in the example section described below.

The type of resin component included in the molded body is not particularly limited, and for example, the required type is appropriately selected among resin components known to be moldable, and used. For example, the resin component may comprise a thermoplastic polymer. The type of thermoplastic polymers applicable in this process may include various crystalline or amorphous polymers, and an example thereof may be exemplified by polyolefin-based polymers such as PP (polypropylene) or PE (polyethylene), polyalkylene oxide-based polymers such as mPPO (modified PPO (polyethylene oxide)), polyamide-based polymers such as PA (polyamide), acetal-based polymers such as POM (polyoxymethylene), polyester-based polymers such as PC (polycarbonate), PBT (polybutylene terephthalate), or PET (polyethylene terephthalate), acrylic-based polymers such as PMMA (poly(methyl methacrylate)), polystyrene-based polymers such as PS (polystyrene) or ABS (acrylonitrile butadiene styrene), and the like, but is not limited thereto.

The resin component may have a unique glass transition temperature (Tg) depending on the type. Although not particularly limited, the lower limit of the glass transition temperature of the resin component applied in the present application may be 50°C, 55°C, 60°C, 65°C, 70°C, 75°C, 80°C, 85°C, 90°C, 95°C, 100°C, 105°C, 110°C, 115°C, 120°C, 125°C, 130°C, 135°C, 140°C, or 145°C or so, and the upper limit thereof may be 500°C, 450°C, 400°C, 350°C, 300°C, 250°C, 200°C, or 150°C or so. The glass transition temperature of the resin component may be more than or equal to, or more than any one of the above-described lower limits, may be less than, or less than or equal to any one of the above-described upper limits, or may be within a range of less than, or less than or equal to any one of the above-described upper limits while being more than or equal to, or more than any one of the above-described lower limits.

The ratio of the resin component in the molded body is not particularly limited, which may be adjusted to an appropriate ratio depending on the purpose. For example, the lower limit of the ratio of the resin component in the molded body may be 50 wt%, 55 wt%, 60 wt%, 65 wt%, 70 wt%, 75 wt%, 80 wt%, 85 wt%, 90 wt%, or 95 wt% or so, and the upper limit thereof may be 100 wt%, 95 wt%, 90 wt%, 85 wt%, 80 wt%, 75 wt%, 70 wt%, 65 wt%, 60 wt%, or 55 wt% or so. The ratio of the resin component may be more than or equal to, or more than any one of the above-described lower limits, may be less than, or less than or equal to any one of the above-described upper limits, or may be within a range of less than, or less than or equal to any one of the above-described upper limits while being more than or equal to, or more than any one of the above-described lower limits.

The molded body may comprise a filler component as an additional component. Such a filler component may be included, for example, as a reinforcing material.

An example of the applicable filler component is not particularly limited, and for example, an organic filler, an inorganic filler, or an organic-inorganic filler such as a glass filler, a carbon filler and/or a silica filler may be applied.

The shape of the filler is not particularly limited, and for example, the filler may be a particulate filler (spherical, rectangular, amorphous, or other shaped particulate filler), a plate-like filler, or a fibrous filler.

The lower limit of the size of such a filler may be, for example, 1 $\mu$m, 5 $\mu$m, or 10 $\mu$m or so, and the upper limit thereof may be 100 $\mu$m, 95 $\mu$m, 90 $\mu$m, 85 $\mu$m, 80 $\mu$m, 75 $\mu$m, 70 $\mu$m, 65 $\mu$m, 60 $\mu$m, 55 $\mu$m, 50 $\mu$m, 45 $\mu$m, 40 $\mu$m, 35 $\mu$m, 30 $\mu$m, 25 $\mu$m, 20 $\mu$m, or 15 $\mu$m or so. The size of the filler may be more than or equal to, or more than any one of the above-described lower limits, may be less than, or less than or equal to any one of the above-described upper limits, or may be within a range of less than, or less than or equal to any one of the above-described upper limits while being more than or equal to, or more than any one of the above-described lower limits.

The size of the filler may be an average diameter of the relevant filler (D50 particle diameter median diameter) when the filler is a particulate filler; may be a thickness of the relevant filler or a long side or a short side in the direction perpendicular to the thickness direction of the filler when the filler is a plate-like filler; and may be a diameter of the cross section of the filler when it is a fibrous filler.

In one example, the filler may be a fibrous filler. When the fibrous filler is applied, pores may be formed more efficiently in a molding process to be described below depending on the aspect ratio of the filler. In addition, through the aspect ratio, the fibrous filler exhibits orientation during the manufacturing process of the molded body, and thus it is possible to effectively form pores with an appropriate shape depending on the applied pressure.

In the case of fibrous filler, the lower limit of the aspect ratio of the filler may be 3, 5, 7, 9, 10, 12, 14, 16, 18, 20, 22, or 24 or so, and the upper limit thereof may be 60, 55, 50, 45, 40, 35, 30, or 25 or so. The aspect ratio may be more than or equal to, or more than any one of the above-described lower limits, may be less than, or less than or equal to any one of the above-described upper limits, or may be within a range of less than, or less than or equal to any one of the above-described upper limits while being more than or equal to, or more than any one of the above-described lower limits. The aspect ratio of the fibrous filler is a value obtained by dividing the length of the filler by the cross-sectional diameter of the filler.

In the case of fibrous fillers, the lower limit of the cross-sectional diameter of the filler may be, for example, 1 $\mu$m, 5 $\mu$m, or 10 $\mu$m or so, and the upper limit thereof may be 100 $\mu$m, 95 $\mu$m, 90 $\mu$m, 85 $\mu$m, 80 $\mu$m, 75 $\mu$m, 70 $\mu$m, 65 $\mu$m, 60 $\mu$m, 55 $\mu$m, 50 $\mu$m, 45 $\mu$m, 40 $\mu$m, 35 $\mu$m, 30 $\mu$m, 25 $\mu$m, 20 $\mu$m, or 15 $\mu$m or so. The cross-sectional diameter of the fibrous filler may be more than or equal to, or more than any one of the above-described lower limits, may be less than, or less than or equal to any one of the above-described upper limits, or may be within a range of less than, or less than or equal to any one of the above-described upper limits while being more than or equal to, or more than any one of the above-described lower limits.

The lower limit of the weight ratio of the filler component relative to 100 parts by weight of the resin component in the molded body may be 1 part by weight, 5 parts by weight, 10 parts by weight, 15 parts by weight, 20 parts by weight, or 25 parts by weight or so, and the upper limit thereof may be 100 parts by weight, 95 parts by weight, 90 parts by weight, 85 parts by weight, 80 parts by weight, 75 parts by weight, 70 parts by weight, 65 parts by weight, 60 parts by weight, 55 parts by weight, 50 parts by weight, 45 parts by weight, 40 parts by weight, 35 parts by weight, 30 parts by weight, or 25 parts by weight or so. The weight ratio of the filler component may be more than or equal to, or more than any one of the above-described lower limits, may be less than, or less than or equal to any one of the above-described upper limits, or may be within a range of less than, or less than or equal to any one of the above-described upper limits while being more than or equal to, or more than any one of the above-described lower limits. In addition, considering the desired physical properties, the weight ratio of the filler component may be changed within or outside the above-described range.

The molded body of the present application comprising the above components may be a plate-like molded body, or may also be a molded body having a concavo-convex shape formed by including raised portions and intaglio portions.

The specific form of the concavo-convex shape, for example, the depth, height, area, form and/or number of the intaglio or raised shape is not particularly limited, and an appropriate form of concavo-convex shape may be applied considering the purpose to which the molded body is applied.

A representative example of existing molding methods for manufacturing a molded body having a concavo-convex shape and comprising a filler component includes injection molding, and the like. In these existing methods, the manufacturing conditions of the molded body are controlled so that pores do not occur therein as many as possible during the molding process. This is because when the pores occur therein during the molding process, the mechanical properties of the molded body deteriorate, and when the pores are formed unevenly, the mechanical properties of the molded body also appear uneven in each portion.

However, in the present application, the conditions are adjusted so that the pores can be actively formed in the molding process to be described below. In addition, through control of the molding conditions in the process, the molded body can be made to exhibit uniform and stable mechanical properties overall.

For example, when the plate-like molded body of the present application has sides formed in a first direction, the standard deviation of the tensile rupture strength of each of upper, middle, and lower ends obtained by trisecting the molded body in a direction perpendicular to the side in the first direction may be controlled in a certain level or less.

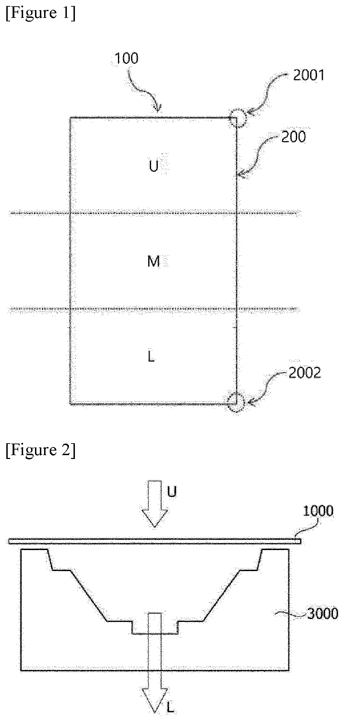

The first direction is a direction parallel to an arbitrary side of the plate-like molded body confirmed when the plate-like molded body is observed along the thickness direction of the molded body. For example, referring to Figure 1, if the molded body has a rectangular shape as in Figure 1, the direction of the horizontal side (100) or the vertical side (200) of the relevant rectangle may be the first direction. In Figure 1, the molded body is divided into three parts in a direction perpendicular to the side of the first direction with the vertical side (200) as the first direction, and an upper end (U), a middle part (M), and a lower end (L) are defined. The results are shown in dotted lines. In some cases, when the side of the molded body is not in the form of a straight line, the direction of a virtual straight line connecting both end points (2001, 2002 in the case of Figure 1) of the side may be set as the first direction.

Here, the trisection of the molded body along the first direction may mean that the molded body are divided so that the upper end (U), the middle part (M), and the lower end (L) have the same area.

Meanwhile, when the tensile rupture strengths of the upper end, middle end, and lower end are set to Su, $S_M$, and $S_L$, respectively and the arithmetic mean is set to A, the standard deviation is a value calculated as $\{ [(S_U-A)^2+(S_M-A)^2+(S_L-A)^2]/3\}^{0.5}$.

In a suitable example, the upper limit of the standard deviation of the tensile rupture strength of each of the upper end, middle end, and lower end may be 100, 95, 90, 85, 80, 75, 70, 65, 60, 55, 50, 45, 40, 35, 30, 25, 20, 15, or 10 or so, and the lower limit thereof may be 0, 2, 4, 6, 8, 10, 12, or 14 or so. The standard deviation may be less than, or less than or equal to any one of the above-described upper limits, or may be within a range of less than, or less than or equal to any one of the above-described upper limits while being more than or equal to, or more than any one of the above-described lower limits.

A method of measuring the tensile rupture strength mentioned in this specification is summarized in Examples. The tensile rupture strength can be measured at room temperature (about 25°C) using a UTM (Universal Testing Machine) device on a specimen cut to have a horizontal length of about 45 mm and a vertical length of about 12.5 mm.

The horizontal direction of the specimen may be a direction parallel to an MD (Machine Direction) or TD (Transverse Direction) of the raw fabric. Here, the MD and TD mean the MD and TD directions of the raw fabric to be described below, which mean the MD and TD directions during an extrusion process of manufacturing a raw fabric.

Both ends of the specimen in the transverse direction are fixed to the device by about 8 mm, the specimen is stretched in the horizontal direction at a speed of about 50 mm/sec, and simultaneously a strength at time points when the specimen is ruptured is measured, where the strength is referred to as the tensile rupture strength.

The molded body of the present application may also be manufactured to have physical properties of a certain ratio or more compared to the physical properties of the raw fabric. Here, the raw fabric means a material in the form of a film or sheet applied to manufacture the molded body having the concavo-convex shape. That is, a process of manufacturing a molded body of the present application may comprise a molding step of applying a material containing the resin component and the filler component to an extrusion process to manufacture a plate material (sheet or film), and forming concavo-convex portions on this plate material. If pores are generated at the interface between the resin component and the filler component inside the plate material due to the pressure applied during the molding process, the physical properties of the final molded body may be different from the physical properties of the previous plate material, where it is preferable that the physical property deviation between the raw fabric and the molded body is kept as small as possible. When the method of the present application is applied, it is possible to control changes in the physical properties of the raw fabric to an appropriate level.

For example, in the molded body, a change ratio of tensile rupture strength compared to the raw fabric may be a predetermined range or more. Here, when the tensile rupture strength of the raw fabric is $S_R$ and the tensile rupture strength of the molded body is Ss, the change ratio of tensile rupture strength compared to the raw fabric is a value calculated as $100 \times S_S/S_R$, and its unit is %. In addition, here, the tensile rupture strength Ss of the molded body may be the tensile rupture strength of the intaglio portion or the raised portion of the molded body, or may be the arithmetic average of the tensile rupture strengths of the intaglio portion and the raised portion.

The lower limit of the change ratio of the tensile rupture strength in the molded body may be 20%, 22%, 24%, 26%, 28%, 30%, 32%, 34%, 36%, 38%, 40%, 42%, 44%, 46%, 48%, 50%, 52%, 54%, 56%, 58%, 60%, 62%, 64%, 66%, 68%, 70%, 72%, 74%, 76%, 78%, 80%, 82%, 84%, 86%, 88%, 90%, 92%, 94%, 96%, or 98% or so, and the upper limit may be 100%, 98%, 96%, 94%, 92%, 90%, 88%, 86%, 84%, 82%, 80%, 78%, 76%, 74%, 72%, 70%, 98%, 66%, 64%, 62%, 60%, 58%, 56%, 54%, 52%, 50%, 48%, 46%, 44%, 42%, 40%, 38%, 36%, 34%, 32%, 30%, 28 %, 26%, 24%, or 22% or so. The change ratio of the tensile rupture strength may be more than, or more than or equal to any one of the above-described lower limits, or may be within a range of less than, or less than or equal to any one of the above-described upper limits while being more than or equal to, or more than any one of the above-described lower limits.

The thickness of the molded body may be adjusted to an appropriate level depending on the purpose, which is not greatly limited. For example, the lower limit of the thickness of the molded body may be 100 μm, 500 μm, 1,000 μm, 1,500 μm, or 2,000 μm or so, and the upper limit thereof may be 100 mm, 95 mm, 90 mm, 85 mm, 80 mm, 75 mm, 70 mm, 65 mm, 60 mm, 55 mm, 50 mm, 45 mm, 40 mm, 35 mm, 30 mm, 25 mm, 20 mm, 15 mm, 10 mm, 8 mm, 6 mm, 4 mm, or 2 mm or so. The thickness may be more than, or more than or equal to any one of the above-described lower limits, may be less than or equal to, or less than any one of the above-described upper limits, or may be within a range of less than, or less than or equal to any one of the above-described upper limits while being more than or equal to, or more than any one of the above-described lower limits.

In the molded body, the intaglio portion or the raised portion may have a certain level of tensile rupture strength.

For example, the lower limit of the tensile rupture strength of the intaglio portion or the raised portion of the molded body may be 50 MPa, 52 MPa, 54 MPa, 56 MPa, 58 MPa, 60 MPa, 62 MPa, 64 MPa, 66 MPa, 68 MPa, 70 MPa, 72 MPa, 74 MPa, 76 MPa, 78 MPa, 80 MPa, 82 MPa, or 84 MPa or so, and the upper limit thereof may be 1000 MPa, 950 MPa, 900 MPa, 850 MPa, 800 MPa, 750 MPa, 700 MPa, 650 MPa, 600 MPa, 550 MPa, 500 MPa, 450 MPa, 400 MPa, 350 MPa, 300 MPa, 250 MPa, 200 MPa, 150 MPa, 100 MPa, or 90 MPa or so. The tensile rupture strength may be more than or equal to, or more than any one of the above-described lower limits, or may be within a range of less than, or less than or equal to any one of the above-described upper limits while being more than or equal to, or more than any one of the above-described lower limits.

The molded body can be used for various purposes, an example of which is an insulator. The insulator is a material capable of blocking the spread of heat or flame generated from one point or part to another point or part. The molded body comprises pores formed therein, and has stable and uniform mechanical properties, whereby it can be stably used as an insulator.

The insulator may comprise at least the above-described plate-like molded body. The insulator may be composed of only the plate-like molded body, or may comprise the plate-like molded body and other necessary materials together.

The above-described contents may be equally to the content of the plate-like molded body included in the insulator, for example, the contents of the resin component and the filler component, or the contents of the absolute value of the difference in tensile rupture strength between the intaglio portion and the raised portion, and the change ratio in tensile rupture strength compared to the raw fabric, the standard deviation of the tensile rupture strength of each of the upper end, middle end, and lower end obtained by trisecting it, and the thickness of the plate-like molded body,.

The present application also relates to a method for manufacturing the molded body.

The manufacturing method of the present application may comprise a step of manufacturing a plate-like molded body having a concavo-convex shape including raised portions and intaglio portions by molding a sheet or a film comprising the resin component and the filler component.

Pores may be created inside the molded body (particularly at the interface between the resin component and the filler component) by the pressure applied to form the concavo-convex shape.

The sheet or film comprising the resin component and the filler component may be the above-described raw fabric. Such a raw fabric may be manufactured by applying a material comprising the resin component and the filler component to a known molding process, for example, an extrusion process, and the like. The specific types and formulation ratios of the resin component and filler component used in manufacturing the raw fabric are the same as the contents described in the molded body.

Such a raw fabric may be in the form of a sheet or film, as described above.

In this case, the thickness of the raw fabric may be adjusted to an appropriate level depending on the purpose, which is not greatly limited. For example, the lower limit of the thickness of the raw fabric may be 100 μm, 500 μm, 1,000 μm, 1,500 μm, or 2,000 μm or so, and the upper limit thereof may be 100 mm, 95 mm, 90 mm, 85 mm, 80 mm, 75 mm, 70 mm, 65 mm, 60 mm, 55 mm, 50 mm, 45 mm, 40 mm, 35 mm, 30 mm, 25 mm, 20 mm, 15 mm, 10 mm, 8 mm, 6 mm, 4 mm, or 2 mm or so. The thickness may be more than, or more than or equal to any one of the above-described lower limits, may be less than or equal to, or less than any one of the above-described upper limits, or may be within a range of less than, or less than or equal to any one of the above-described upper limits while being more than or equal to, or more than any one of the above-described lower limits.

The present application performs a molding step of forming the concavo-convex shape using the raw fabric.

In the molding step, as shown in Figure 2, a mold (3000) having an intaglio corresponding to the desired concavo-convex shape is used. The intaglio shape of the mold may be determined according to the concavo-convex shape.

In the molding step, a step of placing the raw fabric (1000) at the top of the mold (3000), and applying a suction force to the raw fabric at the bottom of the mold (3000) (applying a suction force in the L direction in Figure 2) may be performed.

In the molding step, while the suction force is applied as above, the pressure may be applied at the top of the raw fabric simultaneously (U direction in Figure 2). The pressure from the top may or may not be applied to the raw fabric in the molding step, but it is appropriate from the viewpoint of maintaining uniform physical properties of the molded body that it is applied thereto.

In the case of being applied, the method of applying force from the top of the raw fabric (1000) is not particularly limited.

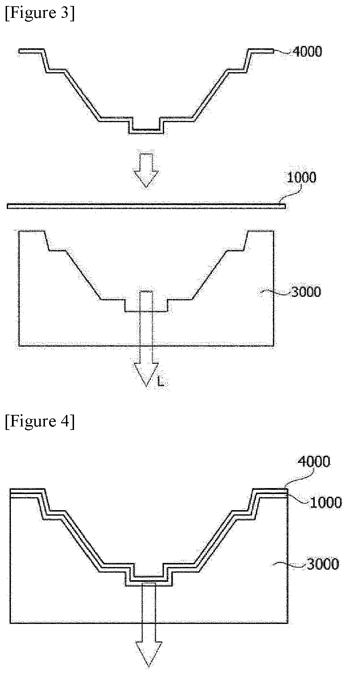

For example, as shown in Figures 3 and 4, the pressure application from the top may be performed using an additional mold (4000) (hereinafter, referred to as a second mold). That is, the pressure may be applied by a method of preparing a second mold (4000) having a raised shape corresponding to an intaglio of the mold in which the intaglio corresponds to the concavo-convex shape as described above, and moving the second mold (4000) toward the raw fabric (1000) to press the raw fabric (1000), as shown in Figures 3 and 4.

In another example, for example, the pressure application from the top may also be performed by spraying gas at the top of the raw fabric.

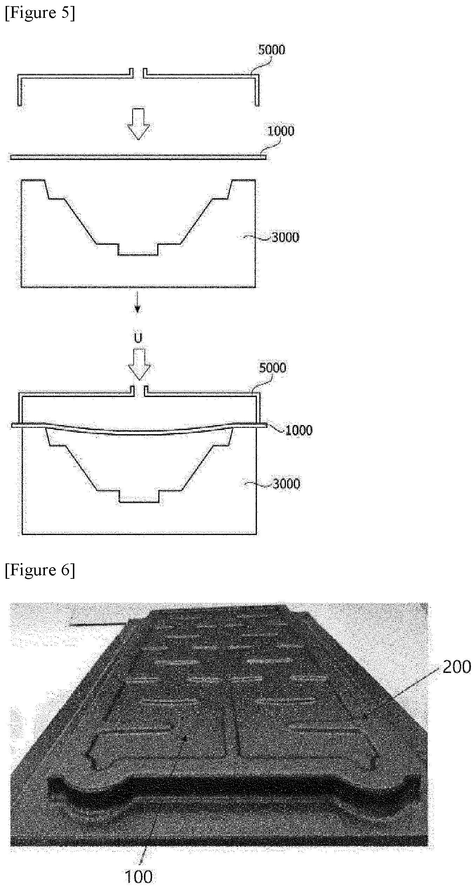

Such an example is shown in Figure 5. As shown in Figure 5, the pressure may be applied by covering a cover (5000) or the like to form a closed space, and then spraying gas (U) such as air from the top.

In the molding step, the temperature of the raw fabric, for example, the surface temperature of the raw fabric may be adjusted, and specifically, the temperature of the raw fabric may be adjusted so that the absolute value of ΔT according to Equation 1 below is within a predetermined range.

[Equation 1]

$$\Delta T = 100 \times (T_s - T_g)/T_g$$

In Equation 1, Ts is the surface temperature of the raw fabric in the molding step, and Tg is the glass transition temperature of the resin component.

For example, the upper limit of the absolute value of ΔT may be 50%, 48%, 46%, 44%, 42%, 40%, 38%, 36%, 34%, 32%, 30%, 28%, 26%, 24%, or 22% or so, and the lower limit thereof may be 0%, 5%, 10%, 15%, 20%, 25%, or 30% or so. ΔT in Equation 1 above may be more than or equal to, or more than any one of the above-described lower limits, may be less than, or less than or equal to any one of the above-described upper limits, or may be within a range of less than, or less than or equal to any one of the above-described upper limits while being more than or equal to, or more than any one of the above-described lower limits.

The surface temperature (Ts) of the raw fabric may be higher or lower than the glass transition temperature of the resin component if it satisfies the range of the absolute value of ΔT in Equation 1 above.

The method of controlling the surface temperature of the raw fabric is not particularly limited, and for example, it may be adjusted using a known heater such as a ceramic heater or a coil heater.

Also, when the force is applied from the top, the relationship between the suction force applied from the bottom of the raw fabric and the pressure applied from the top of the raw fabric may also be adjusted in the relevant process.

For example, the suction from the bottom and the pressure application from the top may be controlled so that the absolute value of ΔP according to Equation 2 below is within a predetermined range.

[Equation 2]

$$\Delta P = 100 \times (P_U - P_L)/P_L$$

In Equation 2, Pu is the pressure applied to the raw fabric by the pressure applied at the top of the raw fabric in the molding step, and $P_L$ is the pressure applied to the raw fabric by the suction at the bottom of the raw fabric.

For example, the upper limit of the absolute value of ΔP in Equation 2 above may be 100%, 95%, 90%, 85%, 80%, 75%, 70%, 65%, 60%, 55%, 50%, 45%, 40%, 35%, 30%, 25%, 20%, 15%, or 5% or so, and the lower limit may also be 0%, 5%, 10%, 15%, 20 25%, 30%, 35%, 40%, 45%, 50%, 55%, or 60% or so. ΔP in Equation 2 above may be more than or equal to, or more than any one of the above-described lower limits, may be less than, or less than or equal to any one of the above-described upper limits, or may be within a range of less than, or less than or equal to any one of the above-described upper limits while being more than or equal to, or more than any one of the above-described lower limits.

The force Pu in Equation 2 means the instantaneous load applied to the raw fabric when only the suction force is applied, and $P_L$ means the instantaneous load applied to the raw fabric when only the pressure is applied.

ΔP in Equation 2 above may be a positive number or a negative number as long as its absolute value satisfies the above range.

Here, the lower limit of the pressure ($P_L$ in Equation 2) applied to the raw fabric by the suction applied at the bottom of the raw fabric may be 100 gf/cm$^2$, 150 gf/cm$^2$, 200 gf/cm$^2$, 250 gf/cm$^2$, 300 gf/cm$^2$, 350 gf/cm$^2$, 400 gf/cm$^2$, 450 gf/cm$^2$, 500 gf/cm$^2$, 550 gf/cm$^2$, 600 gf/cm$^2$, or 650 gf/cm$^2$ or so, and the upper limit thereof may also be 2000 gf/cm$^2$, 1900 gf/cm$^2$, 1800 gf/cm$^2$, 1700 gf/cm$^2$, 1600 gf/cm$^2$, 1500 gf/cm$^2$, 1400 gf/cm$^2$, 1300 gf/cm$^2$, 1200 gf/cm$^2$, 1100 gf/cm$^2$, 1000 gf/cm$^2$, 950 gf/cm$^2$, 900 gf/cm$^2$, 850 gf/cm$^2$, 800 gf/cm$^2$, 750 gf/cm$^2$, or 700 gf/cm$^2$ or so. The force may be more than or equal to, or more than any one of the above-described lower limits, may be less than, or less than or equal to any one of the above-described upper limits, or may be within a range of less than, or less than or equal to any one of the above-described upper limits while being more than or equal to, or more than any one of the above-described lower limits.

Through the above process, the molded body of the present application can be manufactured.

That is, through such a process, it is possible to manufacture a molded body in which the above-described pores are formed, and if the above-described fibrous filler is applied in this process, it is possible to manufacture a molded body in which the desired pores are formed more appropriately.

The method of the present application may further comprise any steps necessary in addition to the above process. For example, in the method, a step of fixing the molded shape through a cooling process or the like may be additionally performed after the molding step.

**Advantageous Effects**

The present application can provide a plate-like molded body, a manufacturing method thereof, and a use of the plate-like molded body. The present application can provide a plate-like molded body including a concavo-convex shape having intaglio portions and raised portions, and having pores formed therein, a method for manufacturing the plate-like molded body, and a use of the plate-like molded body. The present application can provide such a plate-like molded body with uniform mechanical properties.

**Description of Drawings**

Figure 1 is a diagram for explaining a method of trisecting a molded body.

Figures 2 to 5 are diagrams for explaining a method for manufacturing a molded body of the present application.

Figure 6 is a photograph of a molded body manufactured in an example.

Figures 7 to 12 are SEM images of molded bodies manufactured in Examples.

Figure 13 is a photograph for explaining a sampling portion of a specimen for tensile rupture strength measurement.

**Best Mode**

Hereinafter, the present application will be described in detail through examples below, but the scope of the present application is not limited by the following examples.

**Example 1.**

A molded body, in which a concavo-convex shape having an intaglio shape (100) and a raised shape (200) as in Figure 6 was formed, was manufactured. The molded body in Figure 6 is in the form of a rectangular plate, and has a horizontal length of about 608 mm, a vertical length of about 308 mm, and a thickness of about 2 mm.

First, a raw fabric was manufactured. The raw fabric was manufactured to have a thickness of about 2 mm or so by applying a material, in which mPPO (modified PPO (Polyethylene oxide)) as a resin component and glass fiber as a filler component were formulated in a weight ratio of 8:2 (mPPO: filler component), to an extrusion process. The mPPO as the resin component had a glass transition temperature of about 145°C or so, and the glass fiber had a cross-sectional diameter of about 12.5$\mu$m or so and an aspect ratio of 24 or so.

Using the raw fabric, the molded body of Figure 6 was manufactured in the following manner. As shown in Figure 3, the raw fabric (1000) was placed on a first mold (3000) in which an intaglio corresponding to the concavo-convex shape of the molded body was formed. Also, a second mold (4000) in which a raised shape corresponding to the concavo-convex shape was formed was placed on the raw fabric (1000).

Subsequently, the surface temperature of the raw fabric was maintained at about 195°C using a ceramic heater. The ceramic heater was located inside a heater riser, and was raised to the desired temperature through temperature control of a PLC (programmable logic controller) system in a state where the ceramic heater was placed at the top of the raw fabric. It was confirmed using a non-contact infrared thermometer whether the surface temperature of the raw fabric was controlled to the desired temperature.

Thereafter, the pressure was applied to the raw fabric in the form as shown in Figure 4 by performing the suction (L) at the bottom of the first mold (3000) while maintaining the temperature, as shown in Figure 3, and simultaneously moving the second mold (4000) to the bottom.

In the above process, the suction (L) was performed by opening a gauge of the device to 100%. In this case, the vacuum flow is about 1 atmosphere based on the rate, and in this case, the instantaneous load applied to the raw fabric is about 690.2 gf/cm$^2$ (applied load about 1000 kg). In addition, the pressurization force of the second mold (4000) was set such that a level of about 274.4 gf/cm$^2$ (applied load about 500 kg) was applied to the raw fabric.

The state of the first mold (3000) and the second mold (4000) as in Figure 4 was maintained for about 10 seconds or so, and the temperature of the molded body (raw fabric) (1000) was reduced to about 40°C to perform a cooling process.

After the cooling process, the first and second molds (3000, 4000) were separated, and the molded body was recovered.

**Example 2.**

Using the same fabric as in Example 1, a molded body having the same shape as manufactured in Example 1 was manufactured in the following manner.

The raw fabric (1000) was placed on the first mold (3000) in which an intaglio corresponding to the intaglio shape of the desired molded body as in Figure 5 was formed, and a cover (5000) was covered to form an enclosed space.

Subsequently, the surface temperature of the raw fabric was maintained at about 175°C using a coil heater. The heater was located inside a heater riser, and was raised to the desired temperature through temperature control of a PLC (programmable logic controller) system in a state where the ceramic heater was placed at the top of the raw fabric. It was confirmed using a non-contact infrared thermometer whether the surface temperature of the raw fabric was controlled to the desired temperature.

Subsequently, while the suction was performed at the bottom of the first mold (3000), an air pressure was applied to the top of the raw fabric (1000). The suction was performed in the same manner as in Example 1, and the air pressure was set such that the load applied to the raw fabric was about 548.7 gf/cm$^2$ or so (applied load about 1000 kg).

A molded body was manufactured by maintaining the step of applying the suction force and the air pressure for about 10 seconds, and then reducing the temperature to less than 40°C to perform a cooling process.

**Example 3.**

A molded body was manufactured in the same manner as in Example 2, but the process was performed by maintaining the surface temperature of the raw fabric at about 195°C using a coil heater as in Example 2. A molded body was manufactured in the same manner as in Example 2, except for the above content.

**Example 4.**

A molded body was manufactured in the same manner as in Example 2, but the process was performed by maintaining the surface temperature of the raw fabric at about 195°C. A molded body was manufactured in the same manner as in Example 2, except for the above content.

**Example 5.**

A molded body was manufactured in the same manner as in Example 1, but the process was performed while maintaining the surface temperature of the raw fabric at about 175°C using a coil heater. A molded body was manufactured in the same manner as in Example 1, except for the above content.

**Example 6.**

A molded body was manufactured in the same manner as in Example 1, but the process was performed without the pressure application using the second mold to manufacture a molded body.

**Test Example 1. Confirmation of pore formation**

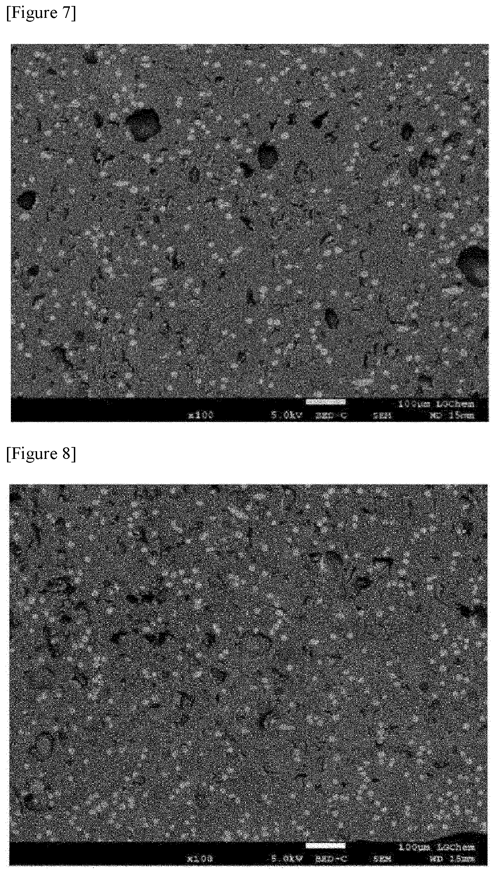

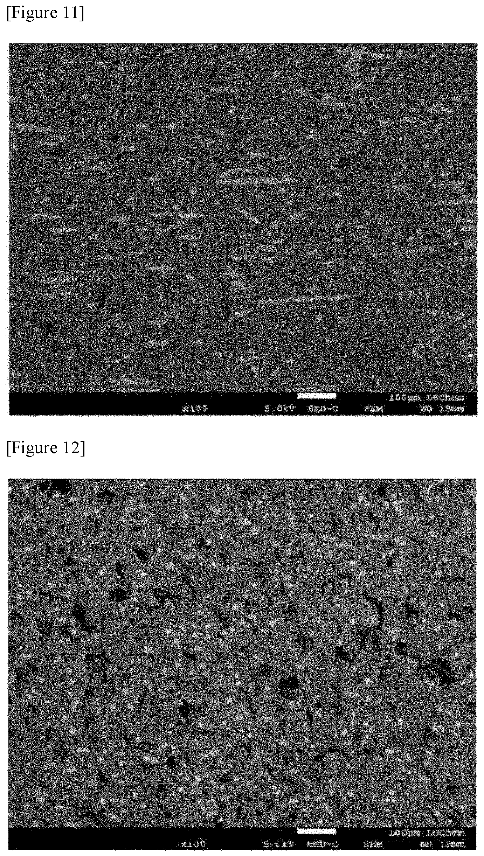

The cross-section of the molded body was photographed with an SEM (scanning electron microscope) device (JEOL, JSM-7800F model) to evaluate moldability. The molded body was subjected to cross-section treatment with a TXP pretreatment device, and then photographed with the SEM device. Upon the above photographing, a BED-C observation mode was applied, and the magnification, working distance, and acceleration voltage were set to 100 times, 15 mm (Working Distance), and 15.0kV, respectively. Figures 7 to 12 show the results for Examples 1 to 6, respectively. Through the drawings, it can be confirmed that pores have been formed inside the molded body by the processes of Examples. Such pores have been mainly formed at the interface between the resin component and the filler component, and it can be confirmed that the density of the pores varies depending on the molding conditions.

**Test Example 2. Evaluation of porosity and thermal conductivity**

The porosity of the molded body was confirmed by analyzing the SEM image obtained in Test Example 1 with an analysis tool (Geodict software, Trinity Engineering). The analysis tool (Geodict software) is software that can identify material properties through multi-scale 2D and 3D image processing, material modeling, visualization, and property analyses. The porosity was identified by inputting the SEM image obtained in Test Example 1 into the analysis tool, primarily applying a compensation filter (Non-local Means Filter), and then secondarily distinguishing the pores, the resin component, and the filler component through the difference in gray value.

The image filter of Geodict analysis tool includes Non-Local Means Filter, Median Filter, Mean Filter, Gauss Filter, Sharpen Filter, Morphological Filter, H-Minima Transform Filter, Compute Gradient Filter, Watershed Filter, and User Defined Filter, and the like, where Non-Local Means Filter has been applied.

Such an image filter helps to clearly analyze SEM images. The applied Non-Local Means Filter is a filter capable of removing noises from the SEM image, which can blur the roughly represented surface, so that it can facilitate component classification on the image.

The resin component, the pores and the filler component were distinguished by applying the above filter, and then determining the boundary of the gray value. When the SEM image is adjusted with the applicable gray value in the Geodict analysis tool, the gray value ranges of the components of the material in the SEM image are divided within the value range of 0 to 255, which is the gray value range. Depending on the resolution of the SEM image and the type of material in the SEM image, it is possible to distinguish components according to the value of the gray value. In the present examples, the gray value range of 0 to 31, the gray value range of 32 to 95, and the gray value range of 96 to 255 can be divided into the pores, the resin component, and the filler component, respectively.

After processing the image, the porosity for each condition was compared based on the same.

In addition, the thermal conductivity was also evaluated using the analysis tool (Geodict software, Trinity Engineering) based on the type and ratio of the applied resin component and filler component, and the analyzed porosity.

The evaluation results were summarized and described in Table 1 below.

[Table 1]

|  |  | Porosity (%) | Thermal conductivity (W/mK) |
|---|---|---|---|
| Example | 1 | 40.2 | 0.2885 |
|  | 2 | 31.5 | 0.3094 |
|  | 3 | 25.8 | 0.3231 |
|  | 4 | 19.7 | 0.3377 |
|  | 5 | 11.3 | 0.3579 |
|  | 6 | 51.4 | 0.2616 |

**Test Example 3. Evaluation of tensile rupture strength**

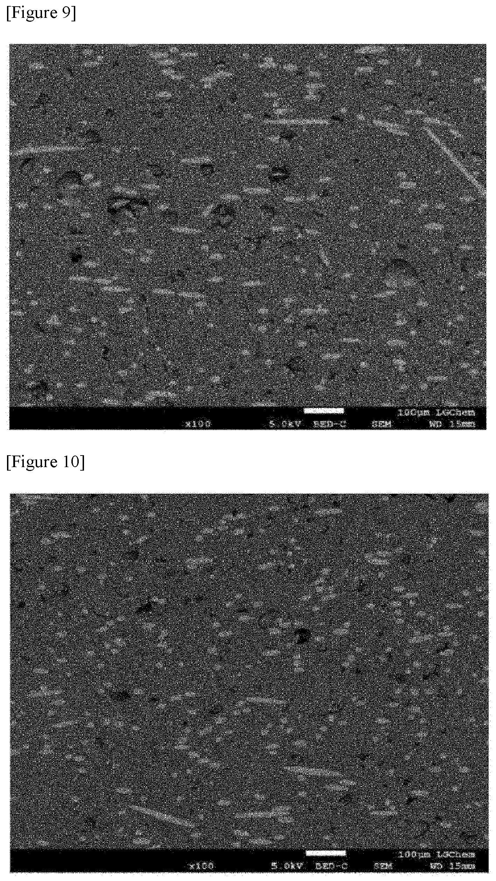

Each plate-like molded body manufactured in Examples or Comparative Example was cut into three equal lengths in the longitudinal direction (arrow direction in Figure 10) to produce upper end, middle end, and lower end specimens, and then the tensile rupture strength of each portion was evaluated. At this time, the cutting of the specimens was performed using a water jet process to prevent cracking of the edge portions and the like.

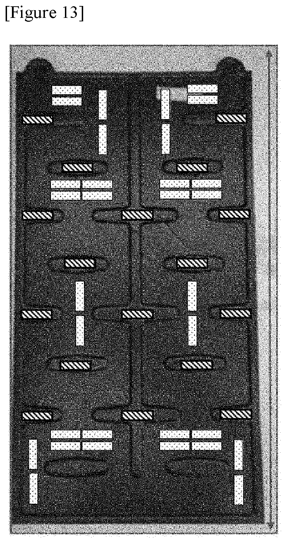

As shown in Figure 13, specimens were each obtained from the intaglio portion (rectangle filled with dots in Figure 13) and the raised portion (rectangle filled with hatched lines in Figure 13) of the molded body, respectively, and specimens were obtained from the upper end, the middle end, and the lower end, respectively in the same manner as above. At this time, the specimen was cut so that the horizontal length was about 45 mm and the vertical length was about 12.5 mm. Upon cutting the specimen, the specimen was cut so that the TD (transverse direction) direction of the molded body was a horizontal direction. The TD direction is a direction based on the extrusion process for manufacturing the raw fabric. Using the above method, four specimens were collected from the intaglio portion and the raised portion of the upper end, respectively (a total of eight specimens), and the specimens were also collected from the middle end and the lower end in the same manner.

The tensile rupture strengths of the specimens were evaluated.

The tensile rupture strength was measured at room temperature (about 25°C) using a UTM (Universal Testing Machine) device. Both ends of the specimen in the transverse direction were fixed to the device by about 8 mm, and the strength at the time point when the specimen was ruptured was measured while it was stretched in the transverse direction, which was referred to as the tensile rupture strength. The stretching was performed at the constant speed with a tensile speed of about 50 mm/sec or so.

The measurement results were summarized and described in Table 2 below. In Table 2, the strength (MPa) is the tensile rupture strength, which is the average value of the tensile rupture strengths measured for the specimens taken from each of the upper end, the middle end, and the lower end. When the tensile rupture strength of the raw fabric is $S_R$ and the average value is Ss, the deviation in Table 2 is the ratio of the average value and the tensile rupture strength of the raw fabric, which is a value calculated as $100 \times S_S/S_R$.

[Table 2]

|  |  |  | Upper end | Middle end | Lower end |
|---|---|---|---|---|---|
| Example | 3 | Strength (MPa) | 59.80 | 52.22 | 56.89 |
|  |  | Deviation (%) | 64.67 | 56.47 | 61.51 |
|  | 6 | Strength (MPa) | 53.96 | 44.52 | 73.37 |
|  |  | Deviation (%) | 58.34 | 48.14 | 79.33 |

**Claims**

1.    A plate-like molded body comprising a resin component and a filler component,

having sides formed along a first direction,
having a concavo-convex shape including raised portion and intaglio portions formed thereon, and
having a porosity of 10% or more.

2. The plate-like molded body according to claim 1, comprising pores formed at the interface between the resin component and the filler component.

3. The plate-like molded body according to claim 1, wherein a tensile rupture strength in each of upper, middle, and lower ends obtained by trisecting the molded body in a direction perpendicular to the side in the first direction has standard deviation of 100 or less.

4. The plate-like molded body according to claim 1, wherein the resin component is a thermoplastic polymer.

5. The plate-like molded body according to claim 1, wherein the filler component comprises a fibrous filler.

6. The plate-like molded body according to claim 5, wherein the fibrous filler has an aspect ratio within the range of 3 to 60.

7. The plate-like molded body according to claim 6, wherein the fibrous filler has a cross-sectional diameter in a range of 1 $\mu$m to 100 $\mu$m.

8. The plate-like molded body according to claim 1, comprising the filler component in an amount of 1 to 100 parts by weight relative to 100 parts by weight of the resin component.

9. The plate-like molded body according to claim 1, wherein the thickness is in a range of 100 $\mu$m to 100 mm.

10. A method for manufacturing a plate-like molded body having a concave-convex shape including raised portions and intaglio portions, and having a porosity of 10% or more by molding a raw fabric including a resin component and a filler component, comprising
a molding step of placing the raw fabric on intaglios of a mold in which the intaglios correspond to the concavo-convex shape, and suctioning the raw fabric at the bottom of the mold.

11. The method for manufacturing a plate-like molded body according to claim 10, wherein a pressure is applied at the top of the raw fabric while suctioning the raw fabric at the bottom of the mold.

12. The method for manufacturing a plate-like molded body according to claim 11, wherein the pressure application is performed by spraying gas at the top of the raw fabric.

13. The method for manufacturing a plate-like molded body according to claim 11, wherein the pressure application is performed by pressing the raw fabric into a raised shape of a second mold in which the raised shape corresponds to the intaglio of the mold.

14. The method for manufacturing a plate-like molded body according to claim 10, wherein in the molding step, the temperature of the raw fabric is maintained so that an absolute value of $\Delta T$ according to Equation 1 below is 5% or more:

[Equation 1]

$$\Delta T = 100 \times (Ts - Tg)/Tg$$

wherein, Ts is the surface temperature of the raw fabric in the molding step, and Tg is the glass transition temperature of the resin component.

15. The method for manufacturing a plate-like molded body according to claim 11, wherein the suction at the bottom and the pressure application at the top are performed so that an absolute value of $\Delta P$ according to Equation 2 below is 5%:

[Equation 2]

$$\Delta P = 100 \times (P_U - P_L)/P_L$$

wherein, Pu is the pressure applied to the raw fabric by the pressure applied at the top of the raw fabric in the molding step, and $P_L$ is the pressure applied to the raw fabric by the suction at the bottom of the raw fabric.

16. The method for manufacturing a plate-like molded body according to claim 15, wherein the pressure applied to the raw fabric by the suction at the bottom of the raw fabric is in a range of 100 gf/cm$^2$ to 2,000 gf/cm$^2$.

17. The method for manufacturing a plate-like molded body according to claim 10, wherein the filler component comprises a fibrous filler.

18. The method for manufacturing a plate-like molded body according to claim 17, wherein the fibrous filler has an aspect ratio in a range of 3 to 60.

19. The method for manufacturing a plate-like molded body according to claim 18, wherein the fibrous filler has a cross-sectional diameter in a range of 1$\mu$m to 100$\mu$m.

20. An insulator comprising the plate-like molded body of any one of claims 1 to 9.

[Figure 1]

[Figure 2]

[Figure 3]

[Figure 4]

[Figure 5]

[Figure 6]

[Figure 7]

[Figure 8]

[Figure 9]

[Figure 10]

[Figure 11]

[Figure 12]

[Figure 13]

| INTERNATIONAL SEARCH REPORT | International application No. |
| | **PCT/KR2023/013876** |

| A. | CLASSIFICATION OF SUBJECT MATTER |
|---|---|
| | **B29C 59/02**(2006.01)i; **B29C 43/02**(2006.01)i; **B29C 59/00**(2006.01)i; **B29C 70/06**(2006.01)i; **B29C 51/10**(2006.01)i |

According to International Patent Classification (IPC) or to both national classification and IPC

| B. | FIELDS SEARCHED |
|---|---|

Minimum documentation searched (classification system followed by classification symbols)

B29C 59/02(2006.01); B29C 35/02(2006.01); B29C 51/10(2006.01); B29C 51/14(2006.01); B29C 69/00(2006.01); B32B 7/02(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 성형체(plastid, molded body), 수지(resin, polymer), 필러(filler), 섬유(fiber), 기공(pore), 단열재(insulator)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 09-254248 A (SUMITOMO CHEM. CO., LTD. et al.) 30 September 1997 (1997-09-30)<br>See abstract; claims 1-5; paragraphs [0004]-[0030]; and figures 1-5. | 1-20 |
| A | JP 09-254249 A (SUMITOMO CHEM. CO., LTD. et al.) 30 September 1997 (1997-09-30)<br>See entire document. | 1-20 |
| A | JP 2008-307901 A (INAX CORP.) 25 December 2008 (2008-12-25)<br>See entire document. | 1-20 |
| A | KR 10-2020-0021045 A (ACELL INDUSTRIES LIMITED) 27 February 2020 (2020-02-27)<br>See entire document. | 1-20 |
| A | KR 10-1990-7001507 A (A. AHLSTROM CORP.) 03 December 1990.<br>See entire document. | 1-20 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **26 December 2023** | **29 December 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/013876**

| Patent document cited in search report | | | Publication date (day/month/year) | Patent family member(s) | | | Publication date (day/month/year) |
|---|---|---|---|---|---|---|---|
| JP | 09-254248 | A | 30 September 1997 | None | | | |
| JP | 09-254249 | A | 30 September 1997 | None | | | |
| JP | 2008-307901 | A | 25 December 2008 | CN | 1906023 | A | 31 January 2007 |
| | | | | JP | 2005-231037 | A | 02 September 2005 |
| | | | | JP | 2005-254792 | A | 22 September 2005 |
| | | | | JP | 2009-006722 | A | 15 January 2009 |
| | | | | JP | 4227906 | B2 | 18 February 2009 |
| | | | | JP | 4227935 | B2 | 18 February 2009 |
| | | | | JP | 4783410 | B2 | 28 September 2011 |
| | | | | JP | 4783411 | B2 | 28 September 2011 |
| | | | | KR | 10-1159865 | B1 | 25 June 2012 |
| | | | | KR | 10-2006-0111531 | A | 27 October 2006 |
| | | | | WO | 2005-051648 | A1 | 09 June 2005 |
| KR | 10-2020-0021045 | A | 27 February 2020 | CN | 110831734 | A | 21 February 2020 |
| | | | | CN | 110831734 | B | 16 November 2021 |
| | | | | EP | 3600816 | A1 | 05 February 2020 |
| | | | | EP | 3600816 | B1 | 21 December 2022 |
| | | | | JP | 2020-511343 | A | 16 April 2020 |
| | | | | JP | 7190752 | B2 | 16 December 2022 |
| | | | | KR | 10-2594884 | B1 | 31 October 2023 |
| | | | | US | 2021-0291414 | A1 | 23 September 2021 |
| | | | | WO | 2018-172799 | A1 | 27 September 2018 |
| KR | 10-1990-7001507 | A | 03 December 1990 | None | | | |

Form PCT/ISA/210 (patent family annex) (July 2022)